# FASCICULE DE BREVET EUROPEEN

(11) **EP 0 981 426 B1**
(45) Date de publication et mention de la délivrance du brevet: **11.06.2003**
(21) Numéro de dépôt: 99907696.1
(22) Date de dépôt: 12.03.1999
(51) Int. Cl.: B26D 7/18

(54) **DISPOSITIF DE DECORTICAGE POUR FLANS DE CARTONS DECOUPES**
AUSBRECHWERKZEUG FÜR KARTONAGEZUSCHNITTE
DEVICE FOR PEELING CUT OUT CARDBOARD BLANKS

(30) Priorité: 12.03.1998 FR 9803066
(43) Date de publication de la demande: 01.03.2000
(73) Titulaire: KOMORI-CHAMBON SA, 45060 Orléans (FR)
(72) Inventeur: ROUX, Jean-Pierre, F-45160 Ardon (FR)
(74) Mandataire: Bruder, Michel
(86) Numéro de dépôt international: FR9900556
(87) Numéro de publication internationale: WO99046091

(56) Documents cités:
- WO-A-93/13917
- WO-A-97/03780
- DE-C- 4 123 807
- GB-A- 750 700
- US-A- 3 320 864
- US-A- 4 327 620
- US-A- 4 608 895

## Description

La présente invention concerne les machines de découpe rotatives de flans de carton et concerne plus particulièrement les dispositifs destinés à assurer la séparation des résidus de découpe du reste des flans, du type géneral connu de GB-A-750700.

On sait qu'une fois la découpe des flans de carton effectuée, que celle-ci ait été réalisée entre un cylindre de découpe et un cylindre contrepartie (Procédé dit SK, soit "Single Knife") ou entre deux cylindres de découpe (Procédé TK, soit "Twin Knife"), il est nécessaire de séparer les chutes, ou "décortiques", du reste du flan.

La séparation peut être réalisée par une opération dite de décorticage intégré, c'est-à-dire que l'opération de décorticage est effectuée sur les cylindres de découpe eux-mêmes. Pour ce faire, l'un de ces cylindres, habituellement le cylindre contrepartie, comporte des éléments acérés, tels que des picots, qui traversent la décortique pour pénétrer dans des orifices prévus dans le cylindre de découpe, si bien que, au cours de la rotation, la décortique est séparée du reste du flan et entraînée par les picots. Des peignes assurent ensuite l'extraction des décortiques maintenues par les picots.

Cette séparation peut être assurée par des dispositifs intégrés mais elle peut également être réalisée par des dispositifs externes distincts des moyens de découpe. La présente invention concerne ces derniers dispositifs. Ceux-ci sont habituellement constitués d'un module de décorticage spécifique qui est disposé en aval des moyens de découpe. Habituellement ce module de décorticage est constitué de deux séries respectives de disques disposés en vis-à-vis l'un au-dessus de l'autre, entre lesquels est admis le flan découpé. L'une de cette série de disques, généralement les disques inférieurs, est pourvue de picots qui, comme précédemment, traversent la décortique pour pénétrer dans des orifices prévus dans le cylindre de découpe, si bien que, au cours de la rotation la décortique est séparée du reste du flan et entraînée par les picots, ainsi que décrit précédemment.

Les éléments rotatifs peuvent également être constitués par exemple par deux cylindres sur l'un desquels lesdits picots sont disposés, par des moyens de fixation appropriés, l'autre cylindre étant pourvu d'alvéoles destinées à recevoir ces derniers au cours de leur rotation.

Les éléments rotatifs peuvent enfin être constitués par des couronnes qui sont en fait des disques de grande largeur.

Ces différents systèmes présentent chacun leurs inconvénients et leurs avantages propres, et l'utilisateur les choisit habituellement en fonction du travail déterminé qu'il souhaite effectuer.

Généralement ces dispositifs sont contenus à l'intérieur d'un bâti facilement interchangeable, dénommé cassette de décorticage, si bien qu'un utilisateur qui souhaite passer d'un travail donné à un autre, ou d'un type d'éléments rotatifs à un autre type différent, procède à l'échange pur et simple de celle-ci.

Or ces cassettes sont d'un coût élevé et il n'est pas forcément intéressant pour un utilisateur de multiplier leur stockage. Il est parfois plus intéressant pécuniairement pour l'utilisateur de procéder à l'échange des éléments contenus dans la cassette. Or il s'agit là on le sait d'une opération qui s'avère généralement délicate, longue et coûteuse en raison d'une part de l'opération de démontage et d'autre part de l'opération de réglage qui doit suivre le remontage.

La présente invention a pour but de proposer un dispositif de décorticage de ce type dans lequel les éléments contenus dans un boîtier, tel que notamment une cassette de décorticage, sont facilement et rapidement interchangeables sans que leur mise en place ne nécessite un réglage ultérieur.

Elle a ainsi pour objet un dispositif de décorticage disposé en usage en aval d'une machine rotative de découpe de flans de carton, du type comportant un boîtier pourvu d'éléments support de deux arbres qui sont entraînés de façon synchronisée en rotation et qui supportent des éléments rotatifs entre lesquels est entraîné le flan de carton découpé, l'un de ces éléments comportant des moyens de préhension destinés à saisir la décortique afin de la séparer du reste du flan, caractérisé en ce que les éléments support des arbres comportent des moyens de maintien autorisant leur mise en place et leur extraction et des moyens d'indexation angulaire relatifs de chacun des deux arbres par rapport à ces moyens de maintien.

Préférentiellement les éléments support comportent des moyens d'indexation dans le sens longitudinal des arbres.

Par ailleurs les éléments support des arbres pourront comporter des moyens de maintien autorisant la mise en place et l'extraction transversale des arbres.

Dans un mode de mise en oeuvre de l'invention l'une des extrémités des arbres est munie d'un palier de roulement dont le maintien est assuré par les éléments support. Le maintien de l'autre extrémité des arbres peut être assurée directement par les éléments support.

Les éléments support peuvent avantageusement être constitués de brides formées de deux éléments semi-circulaires, à savoir un premier élément solidaire d'une embase et un second élément qui est monté pivotant par rapport au premier, de façon à pouvoir occuper deux positions, à savoir une première position, dite de fermeture, dans laquelle il assure le maintien de l'arbre ou de son palier, et une seconde position dite d'ouverture dans laquelle il libère transversalement ces derniers. L'un au moins des deux éléments circulaires peut comporter une butée d'indexation destinée à coopérer avec une échancrure prévue en extrémité de l'arbre maintenu par ledit élément support.

Dans un mode de mise en oeuvre particulièrement intéressant de l'invention, le dispositif comporte au moins deux éléments longitudinaux solidarisés du bâti, à savoir d'une part un support de peignes destinés à assurer la séparation de la décortique des moyens de préhension et d'autre part un pont de sortie du reste du flan de carton, ces deux éléments longitudinaux étant montés sur un même sous-ensemble amovible par rapport au bâti. Le sous-ensemble peut être monté à pivotement à sa partie inférieure sur des axes solidaires du bâti et comporte à sa partie supérieure des moyens de fixation sur celui-ci.

Dans ce mode de mise en oeuvre les éléments portés par le sous-ensemble seront positionnés par rapport aux disques ou cylindres supportés par les arbres, lorsque le sous-ensemble sera fixé sur le dispositif de décorticage.

On décrira ci-après, à titre d'exemple non limitatif, des formes d'exécution de la présente invention, en référence au dessin annexé sur lequel :
La figure 1 est une vue de face d'une cassette de décorticage suivant l'invention.
La figure 2 est une vue en coupe transversale de la cassette représentée sur la figure 1 suivant une ligne II-II de celle-ci.
La figure 3 est une vue de détail en coupe transversale à plus grande échelle, suivant la ligne III-III de la figure 1, d'une bride de fixation mise en oeuvre dans un dispositif suivant l'invention, représentée en position de maintien de l'arbre.
La figure 3a est une vue à plus grande échelle d'un détail de mise en oeuvre du dispositif représenté sur la figure 3 suivant la ligne IIIa-IIIa de celle-ci.
La figure 4 est une vue de la bride représentée sur la figure 3, en position de libération de l'arbre.
La figure 5 est une vue de détail en coupe transversale à plus grande échelle suivant la ligne V-V de la figure 1 de l'autre bride de fixation mise en oeuvre dans le dispositif suivant l'invention, représentée en position de maintien et d'entraînement de l'arbre.
La figure 6 est une vue en coupe du dispositif représenté sur la figure 5 suivant la ligne VI-VI de celle-ci.
La figure 7 est une vue schématique montrant un peigne destiné à assurer la désolidarisation d'éléments acérés entraînant la décortique.
La figure 8 est une vue schématique partielle montrant un sous-ensemble duquel sont solidaires différents outils destinés à être démontés avant que l'on puisse procéder à l'extraction des arbres.
La figure 9 est une vue partielle schématique, en coupe longitudinale d'une variante de maintien et d'entraînement d'un arbre.
La figure 10 est une vue partielle schématique à plus grande échelle du mode de mise en oeuvre représenté sur la figure 9.
La figure 11 est une vue schématique partielle en coupe verticale d'un mode de mise en oeuvre du dispositif suivant l'invention.

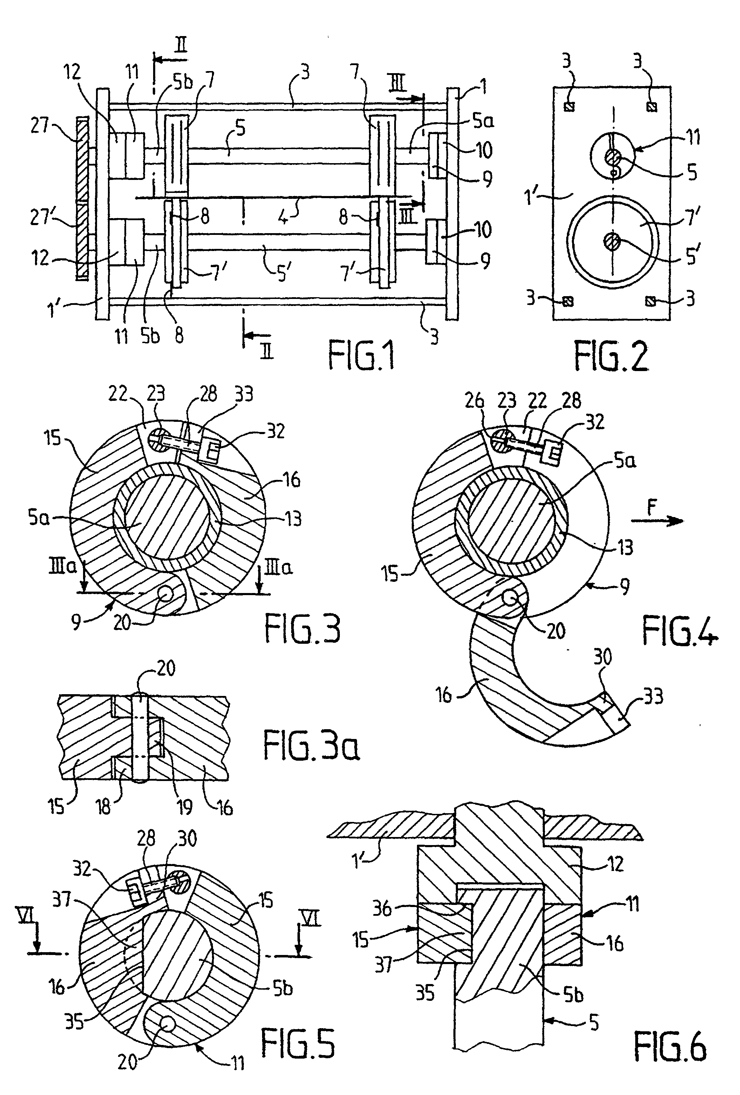

La cassette de décorticage suivant l'invention représentée sur les figures 1 à 6 comprend deux platines latérales 1 et 1' qui sont réunies par quatre entretoises 3. Les faces internes en regard des deux platines 1 et 1' comportent des moyens de maintien de deux arbres parallèles superposés, à savoir un arbre supérieur 5 et un arbre inférieur 5'. Sur ces arbres sont montés plusieurs séries de disques, à savoir des disques supérieurs 7 et des disques inférieurs 7', qui sont respectivement en contact de façon à pouvoir entraîner entre eux la décortique 4 provenant d'un module de découpe non représenté sur le dessin. De façon connue, les disques inférieurs 7' par exemple, sont pourvus d'éléments acérés 8 qui dépassent de leur circonférence et qui sont destinés à pénétrer dans la décortique 4 pour l'arracher du reste du flan découpé 4'.

Les arbres 5 et 5' sont maintenus à leurs extrémités respectives par deux brides, à savoir à leur extrémité droite 5a (sur la figure 1) par une bride fixe 9 qui assure uniquement leur maintien et, à leur autre extrémité 5b, par une bride rotative 11 qui assure à la fois leur maintien, leur entraînement en rotation, et leur indexation angulaire et longitudinale, c'est-à-dire dans le sens de la longueur des arbres, ainsi qu'il sera exposé plus loin.

Les brides fixes 9 sont en appui sur des embases respectives 10 qui sont solidaires de la platine 1 et les brides rotatives 11 sont en appui sur des embases rotatives respectives 12 qui sont entraînées par des engrenages 27 et 27' qui sont en prise l'un avec l'autre, de façon à assurer l'entraînement synchronisé des disques supérieurs 7 et inférieurs 7'.

L'extrémité 5a des arbres 5 est pourvue d'un palier, constitué préférentiellement d'un roulement 13, dont la cage est maintenue par les brides 9. A cet effet chaque bride 9, ainsi que représenté sur les figures 3,4 et 5, est formée de deux demi-couronnes, à savoir une demi-couronne postérieure 15 fixe, solidaire de l'embase 10, et une demi-couronne antérieure 16 qui est montée pivotante autour d'un axe inférieur 20 de la demi-couronne fixe 15, de façon à pouvoir être éclipsée et donner ainsi accès à l'extrémité 5a de chaque arbre 5. A cet effet, ainsi que représenté sur la figure 3a, la partie inférieure de la demi-couronne antérieure 16 forme une chape 18 entre les éléments, de laquelle prend place une partie de plus faible épaisseur 19 de la demi-couronne postérieure 15, les deux demi-couronnes étant maintenues par l'axe 20. La partie supérieure de la demi-couronne postérieure 15 est creusée d'une fente 22 et est traversée d'un axe transversal 23 qui est percé en son milieu d'un trou fileté radial 26 qui reçoit une vis 28.

L'extrémité supérieure de la demi-couronne 16 est usinée sur sa partie antérieure de façon que sa partie postérieure forme une languette 30 sur laquelle vient prendre appui la tête 32 de la vis 28. La languette 30 est creusée d'une fente 33 qui est ouverte à sa partie supérieure. On comprend ainsi que, par le serrage de la vis 28, on applique la face interne de la demi-couronne 16 sur le palier 13, ce qui assure le maintien de celui-ci et, en conséquence, le maintien de l'extrémité 5a de l'arbre 5.

L'autre extrémité 5b de celui-ci est également maintenue par une bride 11 de même type. Cependant, ainsi que représenté sur les figures 5 et 6, l'entraînement de l'arbre 5 se faisant par cette extrémité 5b, cette dernière n'est pas munie de roulements et le serrage de la demi-couronne antérieure 16 s'effectue directement sur l'extrémité 5b de l'arbre 5. Par ailleurs, cette dernière est creusée d'une rainure 36 dont le fond forme un méplat 35 et la face interne de la demi-couronne antérieure 16 est pourvue d'un bossage correspondant 37, qui vient s'ajuster dans la rainure 36, ce qui permet d'une part d'assurer un entraînement positif des arbres supérieur 5 et inférieur 5' et d'autre part, d'assurer une indexation angulaire des deux arbres 5 et 5' l'un par rapport à l'autre par l'intermédiaire des engrenages 27 et 27'. Cela permet également d'assurer une indexation longitudinale, c'est-à-dire dans le sens de la longueur des arbres 5 et 5' puisque le bossage 37 venant s'ajuster dans la rainure 36 de l'arbre, assure un positionnement rigoureux de chacun des arbres concernés par rapport aux platines. Une telle indexation angulaire et longitudinale, opération qui consiste à réaliser un repérage relatif des deux arbres considérés, à la fois angulairement et longitudinalement, est particulièrement intéressante puisqu'elle permet à l'utilisateur, après démontage d'un couple d'arbres et remontage d'un couple d'arbres différents, de n'avoir aucun réglage à effectuer en ce qui concerne la position angulaire et longitudinale de ces deux arbres l'un par rapport à l'autre. Cela permet à l'utilisateur de passer extrêmement rapidement d'une configuration donnée d'un système de décorticage à un autre.

Lorsque l'on souhaite effectuer le démontage d'un arbre, il suffit de desserrer suffisamment les vis 28 des brides 9 et 11 pour pouvoir les faire pivoter autour des axes 20 et les dégager, par les fentes 33 des demi-couronnes antérieures 16. Ces dernières se trouvent ainsi libérées et peuvent alors pivoter autour des axes 20 ainsi que représenté sur la figure 4.

Les extrémités 5a et 5b des arbres 5 sont ainsi libérées et il ne reste plus qu'à les extraire transversalement de leur logement. Une telle opération s'effectue facilement et rapidement, sans qu'il soit nécessaire de démonter la cassette de décorticage elle-même. En raison de l'extrême facilité de démontage et de remontage, l'utilisateur peut disposer de diverses paires d'éléments de décorticage, constitués par exemple de disques, ainsi que représenté sur le dessin, ou constitués de cylindres, aptes à effectuer des travaux spécifiques déterminés ce qui lui permet de les changer en fonction de ses propres besoins.

Afin d'améliorer la rapidité et la facilité avec lesquelles il est possible de passer d'une configuration de décorticage à une autre, on p'eut également constituer un sous-ensemble permettant d'assurer un échange rapide d'autres éléments qui interviennent dans l'opération de décorticage, et qui doivent être démontés préalablement aux arbres 5 et 5'.

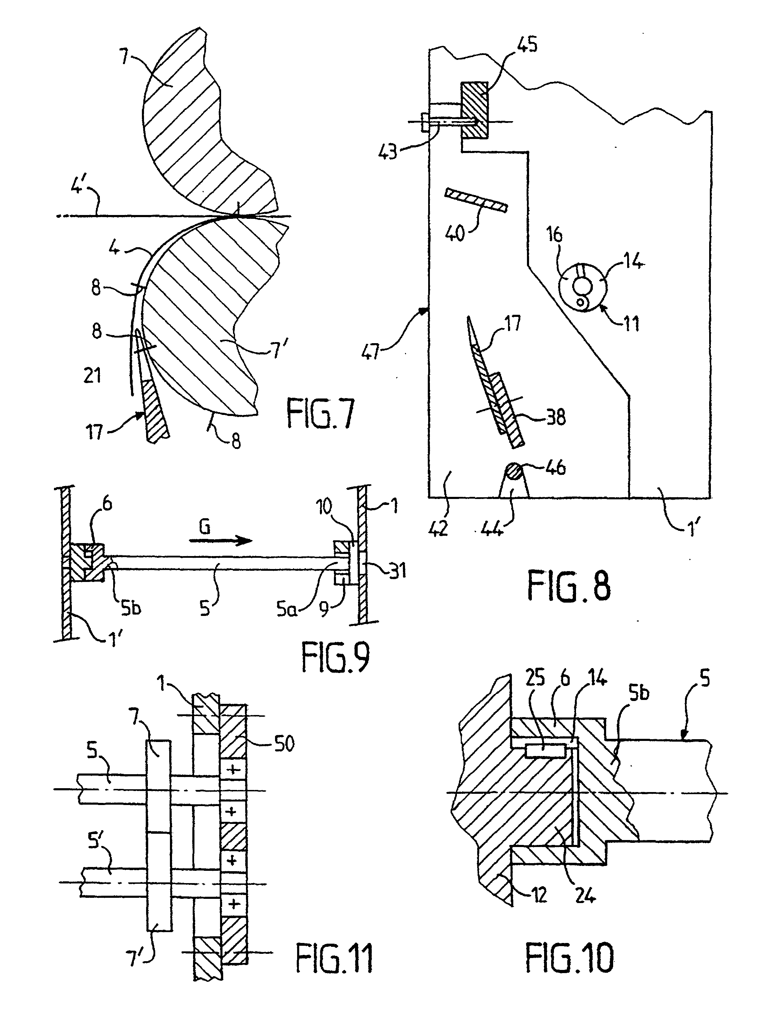

En effet, comme mentionné précédemment, les disques 7 (ou éventuellement les cylindres) inférieurs sont pourvus d'éléments acérés 8 (ainsi que représenté sur la figure schématique 7) qui ont pour fonction de pénétrer dans la décortique 4 afin de la séparer du reste du flan de carton découpé 4' et de l'entraîner vers le bas. Il est dès lors nécessaire de dégager cette dernière des éléments acérés 8. Une telle opération est habituellement effectuée au moyen de peignes 17 dont les dents 21 passent de chaque côté des éléments acérés 8, ainsi que représenté sur la figure 7. Ces peignes 17 sont fixés sur des barres de maintien 38 qui s'étendent entre les deux platines 1,1'.

De même, au niveau de la sortie du reste du flan découpé 4' on dispose habituellement un pont de sortie qui est constitué d'une barre 40 qui s'étend également entre les deux platines 1 et 1'.

Suivant l'invention, on dispose sur les faces internes de ces dernières deux éléments de platine 42 qui sont maintenus entre eux par des éléments formant entretoises à savoir d'une part, par les barres de maintien 38 des peignes et d'autre part, par le pont de sortie 40. On constitue ainsi un sous-ensemble 47 facilement amovible que l'on extrait de la cassette de décorticage avant le démontage des arbres inférieur 5' et supérieur 5.

Ainsi que représenté sur la figure 8, chaque base des éléments de platine 42 est pourvue d'une encoche 44 en forme de V inversé, dont la partie supérieure est semi-circulaire de façon à venir en appui sur un téton cylindrique 46 solidaire des platines 1 et 1'. On assure ainsi une mise en place facile, rapide et précise du sous-ensemble 47 à l'intérieur de la cassette par pivotement de celui-ci autour du téton 46. Chaque sous-ensemble 47 est fixé, à sa partie supérieure, par une vis 43 qui vient prendre place dans un bossage 45 solidaire de chacune des platines 1,1'. Un tel sous-ensemble est ainsi facilement et rapidement amovible.

Le sous-ensemble 47 peut bien entendu permettre d'assurer le maintien d'autres éléments de la cassette qui doivent être démontés avant l'extraction des arbres 5,5'. Les éléments du sous-ensemble 47 seront disposés de telle façon qu'ils coopèrent avec les disques 7, 7'. On constitue ainsi un ensemble d'éléments qui sont destinés à fonctionner les uns avec les autres à savoir les disques ou cylindres supérieurs et inférieurs et le sous-ensemble 47.

Dans ces conditions, l'utilisateur conservera pour effectuer un travail spécifique de décorticage un ensemble constitué des deux disques 5 et 5' mentionnés et du sous-ensemble. Lorsqu'il souhaitera effectuer un travail de décorticage différent, il remplacera donc les deux disques et le sous-ensemble par deux disques différents et le sous-ensemble correspondant à ces derniers. De cette façon, lorsqu'il passera d'un système de décorticage à un système différent, il n'aura à effectuer aucun réglage tant des disques ou cylindres que des accessoires faisant partie du sous-ensemble tels que les peignes 17 ou le pont de sortie 40.

On pourrait bien entendu, pour assurer la fixation des extrémités des arbres sur les embases fixes et mobiles utiliser tout autre moyen de maintien que des brides constituées de deux demi-couronnes.

On pourrait, ainsi que représenté sur les figures 9 et 10, assurer le maintien et l'entraînement de l'extrémité 5b de l'arbre 5 en constituant sur l'embase rotative 12 un bossage 24 pourvu d'un logement pour une clavette 25. L'extrémité 5b de l'arbre 5 forme un manchon 6 creusé d'une rainure 14 dans laquelle vient se loger la clavette 25. On assure ainsi à la fois le maintien, l'entraînement, et l'indexation de cette extrémité 5b de l'arbre 5. L'autre extrémité 5a de l'arbre 5 peut être maintenue au moyen d'une bride 9 du même type que celle représentée sur les figures 3 et 4. Dans ces conditions, pour procéder au démontage de l'arbre, on desserre tout d'abord la bride 9 afin de libérer l'extrémité 5a de l'arbre 5, puis on déplace ce dernier longitudinalement dans le sens de la flèche G (figure 10), déplacement qui est autorisé par la réalisation d'un orifice 31 d'un diamètre plus grand que celui de l'arbre 5, qui est réalisé d'une part dans la bride fixe 10 et dans la platine 1, ce qui a pour effet de désolidariser l'extrémité 5b de l'arbre 5 d'avec les moyens de maintien et d'entraînement en rotation. On fait ensuite pivoter l'extrémité 5b de l'arbre 5 vers l'avant, puis, lorsque cette extrémité est dégagée, on peut extraire transversalement l'arbre 5 de la cassette de décorticage.

On pourrait bien entendu assurer le maintien de l'extrémité 5a de l'arbre 5 avec tout autre moyen approprié.

Le dispositif suivant l'invention permet également d'extraire les arbres 5,5' dans le sens longitudinal. On a ainsi représenté de façon schématique sur la figure 11 une telle variante de mise en oeuvre dans laquelle la platine 1 est ouverte du côté Sa des arbres 5 et le maintien de ces arbres est assuré par une platine secondaire 50 qui est fixée sur la platine principale 1 par des moyens permettant d'assurer leur solidarisation de façon facilement amovible. Des moyens sont prévus pour assurer le maintien des arbres 5 et 5' de façon temporaire par rapport à la platine 1, le temps pour l'utilisateur d'extraire la platine secondaire 50.

Dans ces conditions, lorsque l'utilisateur veut procéder à l'extraction des arbres 5 et 5' il procède au démontage de la platine 50 puis, celle-ci étant dégagée, il peut alors procéder à l'extraction longitudinale des arbres 5 et 5' et des éléments 7,7' destinés à l'entraînement de la décortique dont ils sont pourvus.

## Revendications

1. Dispositif de décorticage disposé en usage en aval d'une machine rotative de découpe de flans de carton (4), du type comportant un boîtier (1,1') pourvu d'éléments support (9,11) de deux arbres (5,5') qui sont entraînés de façon synchronisée en rotation et qui supportent des éléments (7,7') rotatifs entre lesquels est entraîné le flan de carton découpé, l'un de ces éléments (7,7') comportant des moyens de préhension (8) destinés à saisir la décortique (4) afin de la séparer du reste du flan (4'), **caractérisé en ce que** les éléments support (9,11) des arbres (5,5') comportent des moyens de maintien (15,16) autorisant la mise en place et l'extraction de ces derniers et des moyens d'indexation angulaire (35) de chacun de ces deux arbres (5,5') par rapport à ces moyens de maintien.

2. Dispositif suivant la revendication 1 **caractérisé en ce que** les éléments support (11) comportent des moyens d'indexation dans le sens longitudinal des arbres (5,5').

3. Dispositif suivant la revendication 1 **caractérisé en ce que** les éléments support (9,11) des arbres (5,5') comportent des moyens de maintien (15,16) autorisant la mise en place et l'extraction transversale de ces derniers.

4. Dispositif suivant l'une des revendications précédentes **caractérisé en ce que** l'une des extrémités (5a) des arbres (5,5') est munie d'un palier de roulement (13) dont le maintien est assuré par les éléments support (9).

5. Dispositif suivant la revendication 4 **caractérisé en ce que** le maintien de l'autre extrémité (5b) des arbres (5,5') est assurée directement par les éléments support (11).

6. Dispositif suivant l'une des revendications précédentes **caractérisé en ce que** les éléments support sont constitués de brides (9,11) formées de deux éléments semi-circulaires, à savoir un premier élément (15) solidaire d'une embase (10,12) et un second élément (16) qui est monté pivotant par rapport au premier, de façon à pouvoir occuper deux positions, à savoir une première position, dite de fermeture, dans laquelle il assure le maintien de l'arbre (5,5') ou de son palier (13), et une seconde position dite d'ouverture dans laquelle il libère transversalement ces derniers.

7. Dispositif suivant la revendication 6 **caractérisé en ce que** l'un au moins des deux éléments semi-circulaires (16) comporte une butée d'indexation (37) destinée à coopérer avec une échancrure (36) prévue en extrémité de l'arbre maintenu par ledit élément support.

8. Dispositif suivant l'une des revendications précédentes **caractérisé en ce qu'**il comporte au moins deux éléments longitudinaux (38,40) solidarisés du bâti, à savoir d'une part un support (38) de peignes (17) destinés à assurer la séparation de la décortique (4) des moyens de préhension (8) et d'autre part un pont de sortie (40) du reste du flan de carton (4'), ces deux éléments longitudinaux étant montés sur un même sous ensemble (47) amovible par rapport au bâti (1,1',3).

9. Dispositif suivant la revendication 8 **caractérisé en ce que** le sous ensemble (47) est monté à pivotement à sa partie inférieure sur des axes (46) solidaires du bâti (1,1',3) et comporte à sa partie supérieure des moyens de fixation (43,45) sur celui-ci.

10. Dispositif suivant la revendication 9 **caractérisé en ce que** les éléments portés par le sous-ensemble (47) se trouvent positionnés par rapport aux disques ou cylindres supportés par les arbres, lorsque le sous-ensemble est fixé sur le dispositif de décorticage.

## Claims

1. Peeling device disposed, in use, downstream of a rotary machine for cutting out cardboard blanks (4), of the type comprising a housing (1, 1') provided with elements (9, 11) supporting two shafts (5, 5') which are driven synchronously in rotation and which support rotary elements (7, 7') between which is driven the cut out cardboard blank, one of these elements (7, 7') comprising prehensile means (8) intended to grasp the peel (4) in order to separate it from the rest of the blank (4'), **characterized in that** the elements (9, 11) supporting the shafts (5, 5') comprise holding means (15, 16) enabling the latter to be fixed and removed, and means (35) for angular indexation of each of these two shafts (5, 5') with respect to these holding means.

2. Device according to Claim 1, **characterized in that** the supporting elements (11) comprise indexation means in the longitudinal direction of the shafts (5, 5').

3. Device according to Claim 1, **characterized in that** the elements (9, 11) supporting the shafts (5, 5') comprise holding means (15, 16) allowing the transverse positioning and removal of the latter.

4. Device according to one of the preceding Claims, **characterized in that** one of the ends (5a) of the shafts (5, 5') is provided with a roller bearing (13) whose hold is ensured by the supporting elements (9).

5. Device according to Claim 4, **characterized in that** the hold of the other end (5b) of the shafts (5, 5') is ensured directly by the supporting elements (11).

6. Device according to one of the preceding Claims, **characterized in that** the supporting elements are constituted by flanges (9, 11) formed by two semi-circular elements, namely a first element (15) fast with a base (10, 12) and a second element (16) which is mounted to pivot with respect to the first, so as to be able to occupy two positions, namely a first, so-called closure position in which it ensures hold of the shaft (5, 5') or of its bearing (13), and a second, so-called opening position in which it releases these latter transversely.

7. Device according to Claim 6, **characterized in that** at least one of the two semi-circular elements (16) comprises an indexation stop (37) intended to cooperate with a notch (36) provided at the end of the shaft held by said supporting element.

8. Device according to one of the preceding Claims, **characterized in that** it comprises at least two longitudinal elements (38, 40) connected to the frame, namely, on the one hand, a support (38) for combs (17) intended to ensure separation of the peel (4) from the prehensile means (8) and, on the other hand, an exit bridge (40) for the rest of the cardboard blank (4'), these two longitudinal elements being mounted on the same sub-assembly (47) removable with respect to the frame (1, 1', 3).

9. Device according to Claim 8, **characterized in that** the sub-assembly (47) is mounted to pivot in its lower part on pins (46) fast with the frame (1, 1', 3) and comprises in its upper part means (43, 45) for fixation on the latter.

10. Device according to Claim 9, **characterized in that** the elements borne by the sub-assembly (47) are positioned with respect to the discs or cylinders supported by the shafts, when the sub-assembly is fixed on the peeling device.

## Patentansprüche

1. Abfallstück-Ausbrechvorrichtung, die im Betrieb in Förderrichtung hinter einer Rotationsausstanzvorrichtung für Kartonzuschnitte (4) angeordnet ist, mit einem Maschinenrahmen (1, 1'), welcher mit Trägerelementen (9, 11) für zwei Wellen (5, 5') versehen ist, die drehsynchron zueinander angetrieben werden und Rotationselemente (7, 7') tragen, zwischen denen der ausgestanzte Kartonzuschnitt mitgenommen wird, wobei eines dieser Elemente (7, 7') Greifeinrichtungen (8) aufweist, welche die Kartonzuschnitt-Abfallstücke (4) greifen, um diese von den übrigen Zuschnitten (4') zu trennen, **dadurch gekennzeichnet, dass** die Trägerelemente (9, 11) der Wellen (5, 5') Halteeinrichtungen (15, 16), welche deren Einbau und Ausbau. ermöglichen, sowie Ein-. richtungen (35) zur Winkelindexierung jeder dieser beiden Wellen (5, 5') bezüglich dieser Halteeinrichtungen aufweisen.

2. Vorrichtung nach Anspruch 1, **dadurch gekennzeichnet, dass** die Trägerelemente (11) Einrichtungen zur Indexierung in Längsrichtung der Wellen (5, 5') aufweisen.

3. Vorrichtung nach Anspruch 1, **dadurch gekennzeichnet, dass** die Trägerelemente (9, 11) der Wellen (5, 5') Halteeinrichtungen (15, 16) aufweisen, welche den Einbau und Ausbau in deren Querrichtung ermöglichen.

4. Vorrichtung nach einem der vorhergehenden Ansprüche, **dadurch gekennzeichnet, dass** eines der Enden (5a) der Wellen (5, 5') mit einem Wälzlager (13) versehen ist, das durch die Trägerelemente (9) gehaltert ist.

5. Vorrichtung nach Anspruch 4, **dadurch gekennzeichnet, dass** das andere Ende (5b) der Wellen (5, 5') direkt durch die Trägerelemente (11) gehaltert ist.

6. Vorrichtung nach einem der vorhergehenden Ansprüche, **dadurch gekennzeichnet, dass** die Trägerelemente aus Flanschen (9, 11) bestehen, die aus zwei halbkreisförmigen Elementen aufgebaut sind, nämlich einem ersten Element (15), das mit einem Sockelstück (10, 12) fest verbunden ist, und einem zweiten Element (16), das relativ zum ersten Element schwenkbar angebracht ist, so dass es zwei Positionen einnehmen kann, und zwar eine erste oder Schließposition, in welcher es die Welle (5, 5') oder deren Lager (13) festhält, und eine zweite oder Öffnungsposition, in welcher es letztere in Querrichtung freigibt.

7. Vorrichtung nach Anspruch 6, **dadurch gekennzeichnet, dass** zumindest eines der beiden halbkreisförmigen Elemente (16) einen Indexierungsanschlag (37) aufweist, der mit einer Aussparung (36) zusammenwirkt, die am Ende der vom Trägerelement gehalterten Welle vorgesehen ist.

8. Vorrichtung nach einem der vorhergehenden Ansprüche, **dadurch gekennzeichnet, dass** sie mindestens zwei mit dem Rahmen fest verbundene Längselemente (38, 40) aufweist, nämlich zum einen ein Trägerstück (38) für Kämme (17), welche für ein Trennen der Abfallstücke (4) von den Greifeinrichtungen (8) sorgen, und zum anderen einen Austrittssteg (40) für die übrigen Kartonzuschnitte (4'), wobei diese beiden Längselemente auf derselben, am Maschinenrahmen (1, 1', 3) abnehmbar befestigten Untereinheit (47) angebracht sind.

9. Vorrichtung nach Anspruch 8, **dadurch gekennzeichnet, dass** die Untereinheit (47) an ihrem unteren Teil an mit dem Maschinenrahmen (1, 1', 3) fest verbundenen Achsen (46) schwenkbar befestigt ist und an ihrem oberen Teil Einrichtungen zur festen Anbringung (43, 45) an diesem Rahmen aufweist.

10. Vorrichtung nach Anspruch 9, **dadurch gekennzeichnet, dass** die von der Untereinheit (47) gehalterten Elemente mit der Ausstanzvorrichtung fest verbundener Untereinheit.gegenüber den von den Wellen gehalterten Scheiben oder dem Zylinder positioniert sind.
